# EUROPEAN PATENT APPLICATION

(11) **EP 1 980 882 A2**
(43) Date of publication of application: **15.10.2008**
(21) Application number: 08153557.7
(22) Date of filing: 28.09.2007
(51) Int. Cl.: G02B 6/00

(54) **Thin light bar and method of manufacturing**

(30) Priority: 06.10.2006 US 828511 P
(62) Divisional of application: 07839045.7
(71) Applicant: Qualcomm Mems Technologies, Inc., San Diego, CA 92121 (US)
(72) Inventor: Mienko, Marek, San Jose, CA 95134 (US); Xu, Gang, Cupertino, CA 95014 (US); Gruhlke, Russell Wayne, Milpitas, CA 95035 (US); Bita, Ion, San Jose, CA 95134 (US)
(74) Representative: Witte, Weller & Partner

(57) **Abstract**

Various embodiments disclosed herein comprise a display device comprising a plurality of spatial light modulators and an illumination apparatus. The illumination apparatus comprising a light bar (100C) that guides light along a length thereof and turning microstructure disposed on top or bottom of the light bar. The turning microstructure directs the light out a side of the light bar. The illumination apparatus further comprises a light guide panel disposed with respect to the side of the light bar such that the light from the light bar is coupled to the light guide panel. The light guide panel is configured to direct the light coupled therein out of the light guide panel. The plurality of light modulators disposed with respect to the light guide panel to receive the light directed out of the light guide panel.

## Description

### BACKGROUND

### Field

The present invention relates to microelectromechanical systems (MEMS).

### Description of the Related Art

Microelectromechanical systems (MEMS) include micro mechanical elements, actuators, and electronics. Micromechanical elements may be created using deposition, etching, and or other micromachining processes that etch away parts of substrates and/or deposited material layers or that add layers to form electrical and electromechanical devices. One type of MEMS device is called an interferometric modulator. As used herein, the term interferometric modulator or interferometric light modulator refers to a device that selectively absorbs and/or reflects light using the principles of optical interference. In certain embodiments, an interferometric modulator may comprise a pair of conductive plates, one or both of which may be transparent and/or reflective in whole or part and capable of relative motion upon application of an appropriate electrical signal. In a particular embodiment, one plate may comprise a stationary layer deposited on a substrate and the other plate may comprise a metallic membrane separated from the stationary layer by an air gap. As described herein in more detail, the position of one plate in relation to another can change the optical interference of light incident on the interferometric modulator. Such devices have a wide range of applications, and it would be beneficial in the art to utilize and/or modify the characteristics of these types of devices so that their features can be exploited in improving existing products and creating new products that have not yet been developed.

### SUMMARY

In one embodiment, a light bar having a front surface configured for optical communication with a display device, the light bar being configured to guide light along a length thereof, comprises a first film means comprising a plurality of faceted features, a second film means comprising a plurality of faceted features, and an optical coupling means positioned between and coupling the first and second film means, wherein the faceted features on the first and second film means are configured to direct light out of the front surface of the light bar towards the display device.

In one embodiment, a method of manufacturing a light bar having a front surface in optical communication with a display device, the light bar being configured to guide light along a length thereof, comprises forming a plurality of faceted features on a first film layer, forming a plurality of faceted features on a second film layer, and positioning an optical coupling layer between the first and second film layers, wherein the faceted features on the first and second film layers are configured to direct light out of the front surface of the light bar towards the display device.

In one embodiment, an illumination apparatus comprises a light bar, having two or more distinct layers, that guides light along a length thereof, and a turning microstructure disposed on at least one of a top and a bottom of the light bar, the turning microstructure configured to direct said light out a side of the light bar. In one embodiment, the turning microstructure comprises a plurality of faceted features that are embossed on a first film layer on the top of the light bar and on a second film layer on the bottom of the light bar. In one embodiment, the two or more distinct layers comprise the first film layer and the second film layer.

### BRIEF DESCRIPTION OF THE DRAWINGS

FIG. 1 is an isometric view depicting a portion of one embodiment of an interferometric modulator display in which a movable reflective layer of a first interferometric modulator is in a relaxed position and a movable reflective layer of a second interferometric modulator is in an actuated position.

FIG. 2 is a system block diagram illustrating one embodiment of an electronic device incorporating a 3x3 interferometric modulator display.

FIG. 3 is a diagram of movable mirror position versus applied voltage for one exemplary embodiment of an interferometric modulator of FIG. 1.

FIG. 4 is an illustration of a set of row and column voltages that may be used to drive an interferometric modulator display.

FIGS. 5A and 5B illustrate one exemplary timing diagram for row and column signals that may be used to write a frame of display data to the 3x3 interferometric modulator display of FIG. 2.

FIGS. 6A and 6B are system block diagrams illustrating an embodiment of a visual display device comprising a plurality of interferometric modulators.

FIG. 7A is a cross section of the device of FIG. 1.

FIG. 7B is a cross section of an alternative embodiment of an interferometric modulator.

FIG. 7C is a cross section of another alternative embodiment of an interferometric modulator.

FIG 7D is a cross section of yet another alternative embodiment of an interferometric modulator.

FIG. 7E is a cross section of an additional alternative embodiment of an interferometric modulator.

FIG. 8 is an exploded perspective view of one embodiment of an illumination system disposed forward a spatial light modulator array.

FIG. 9 is a top view of an illumination apparatus comprising a light bar and a light guide panel.

FIGS. 10 and 11 are top views of embodiments of light bars comprising microstructures on a top and/or bottom surface of the light bars.

FIG. 12 is an elevated side view of the light bar of FIG. 10.

### DETAILED DESCRIPTION OF CERTAIN EMBODIMENTS

The following detailed description is directed to certain specific embodiments of the invention. However, the invention can be embodied in a multitude of different ways. In this description, reference is made to the drawings wherein like parts are designated with like numerals throughout. As will be apparent from the following description, the embodiments may be implemented in any device that is configured to display an image, whether in motion (e.g., video) or stationary (e.g., still image), and whether textual or pictorial. More particularly, it is contemplated that the embodiments may be implemented in or associated with a variety of electronic devices such as, but not limited to, mobile telephones, wireless devices, personal data assistants (PDAs), hand-held or portable computers, GPS receivers/navigators, cameras, MP3 players, camcorders, game consoles, wrist watches, clocks, calculators, television monitors, flat panel displays, computer monitors, auto displays (e.g., odometer display, etc.), cockpit controls and/or displays, display of camera views (e.g., display of a rear view camera in a vehicle), electronic photographs, electronic billboards or signs, projectors, architectural structures, packaging, and aesthetic structures (e.g., display of images on a piece of jewelry). MEMS devices of similar structure to those described herein can also be used in non-display applications such as in electronic switching devices.

Various embodiments disclosed herein comprise a display device comprising a plurality of spatial light modulators and an illumination apparatus. The illumination apparatus comprises a light bar that guides light along a length thereof and turning microstructure disposed on top or bottom of the light bar. The turning microstructure directs the light out a side of the light bar. The illumination apparatus further comprises a light guide panel disposed with respect to the side of the light bar such that the light from the light bar is coupled to the light guide panel. The light guide panel is configured to direct the light coupled therein out of the light guide panel. The plurality of light modulators disposed with respect to the light guide panel to receive the light directed out of the light guide panel.

In certain embodiments, the light modulators comprise reflective spatial light modulators. In some embodiments, the light modulators comprise MEMS devices. In various embodiments, the light modulators comprise interferometric modulators.

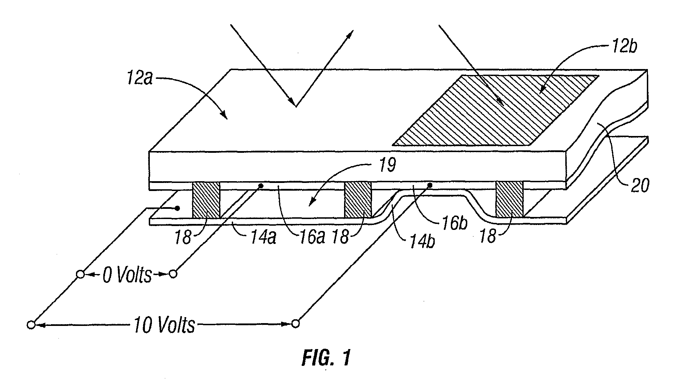

One interferometric modulator display embodiment comprising an interferometric MEMS display element is illustrated in Figure 1. In these devices, the pixels are in either a bright or dark state. In the bright ("on" or "open") state, the display element reflects a large portion of incident visible light to a user. When in the dark ("off" or "closed") state, the display element reflects little incident visible light to the user. Depending on the embodiment, the light reflectance properties of the "on" and "off" states may be reversed. MEMS pixels can be configured to reflect predominantly at selected colors, allowing for a color display in addition to black and white.

Figure 1 is an isometric view depicting two adjacent pixels in a series of pixels of a visual display, wherein each pixel comprises a MEMS interferometric modulator. In some embodiments, an interferometric modulator display comprises a row/column array of these interferometric modulators. Each interferometric modulator includes a pair of reflective layers positioned at a variable and controllable distance from each other to form a resonant optical cavity with at least one variable dimension. In one embodiment, one of the reflective layers may be moved between two positions. In the first position, referred to herein as the relaxed position, the movable reflective layer is positioned at a relatively large distance from a fixed partially reflective layer. In the second position, referred to herein as the actuated position, the movable reflective layer is positioned more closely adjacent to the partially reflective layer. Incident light that reflects from the two layers interferes constructively or destructively depending on the position of the movable reflective layer, producing either an overall reflective or non-reflective state for each pixel.

The depicted portion of the pixel array in Figure 1 includes two adjacent interferometric modulators 12a and 12b. In the interferometric modulator 12a on the left, a movable reflective layer 14a is illustrated in a relaxed position at a predetermined distance from an optical stack 16a, which includes a partially reflective layer. In the interferometric modulator 12b on the right, the movable reflective layer 14b is illustrated in an actuated position adjacent to the optical stack 16b.

The optical stacks 16a and 16b (collectively referred to as optical stack 16), as referenced herein, typically comprise of several fused layers, which can include an electrode layer, such as indium tin oxide (ITO), a partially reflective layer, such as chromium, and a transparent dielectric. The optical stack 16 is thus electrically conductive, partially transparent and partially reflective, and may be fabricated, for example, by depositing one or more of the above layers onto a transparent substrate 20. In some embodiments, the layers are patterned into parallel strips, and may form row electrodes in a display device as described further below. The movable reflective layers 14a, 14b may be formed as a series of parallel strips of a deposited metal layer or layers (orthogonal to the row electrodes of 16a, 16b) deposited on top of posts 18 and an intervening sacrificial material deposited between the posts 18. When the sacrificial material is etched away, the movable reflective layers 14a, 14b are separated from the optical stacks 16a, 16b by a defined gap 19. A highly conductive and reflective material such as aluminum may be used for the reflective layers 14, and these strips may form column electrodes in a display device.

With no applied voltage, the cavity 19 remains between the movable reflective layer 14a and optical stack 16a, with the movable reflective layer 14a in a mechanically relaxed state, as illustrated by the pixel 12a in Figure 1. However, when a potential difference is applied to a selected row and column, the capacitor formed at the intersection of the row and column electrodes at the corresponding pixel becomes charged, and electrostatic forces pull the electrodes together. If the voltage is high enough, the movable reflective layer 14 is deformed and is forced against the optical stack 16. A dielectric layer (not illustrated in this Figure) within the optical stack 16 may prevent shorting and control the separation distance between layers 14 and 16, as illustrated by pixel 12b on the right in Figure 1. The behavior is the same regardless of the polarity of the applied potential difference. In this way, row/column actuation that can control the reflective vs. non-reflective pixel states is analogous in many ways to that used in conventional LCD and other display technologies.

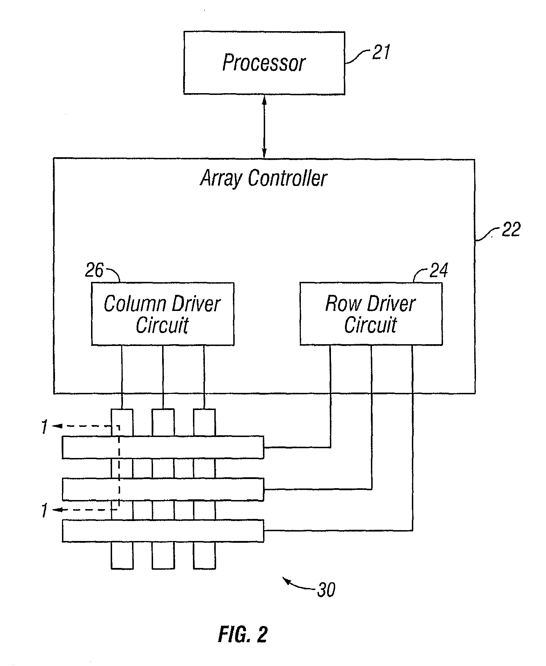

Figures 2 through 5 illustrate one exemplary process and system for using an array of interferometric modulators in a display application.

Figure 2 is a system block diagram illustrating one embodiment of an electronic device that may incorporate aspects of the invention. In the exemplary embodiment, the electronic device includes a processor 21 which may be any general purpose single- or multi-chip microprocessor such as an ARM, Pentium^{®}, Pentium II^{®}, Pentium III^{®}, Pentium IV^{®} Pentium^{®} Pro, an 8051, a MIPS^{®}, a Power PC^{®}, an ALPHA^{®}, or any special purpose microprocessor such as a digital signal processor, microcontroller, or a programmable gate array. As is conventional in the art, the processor 21 may be configured to execute one or more software modules. In addition to executing an operating system, the processor may be configured to execute one or more software applications, including a web browser, a telephone application, an email program, or any other software application.

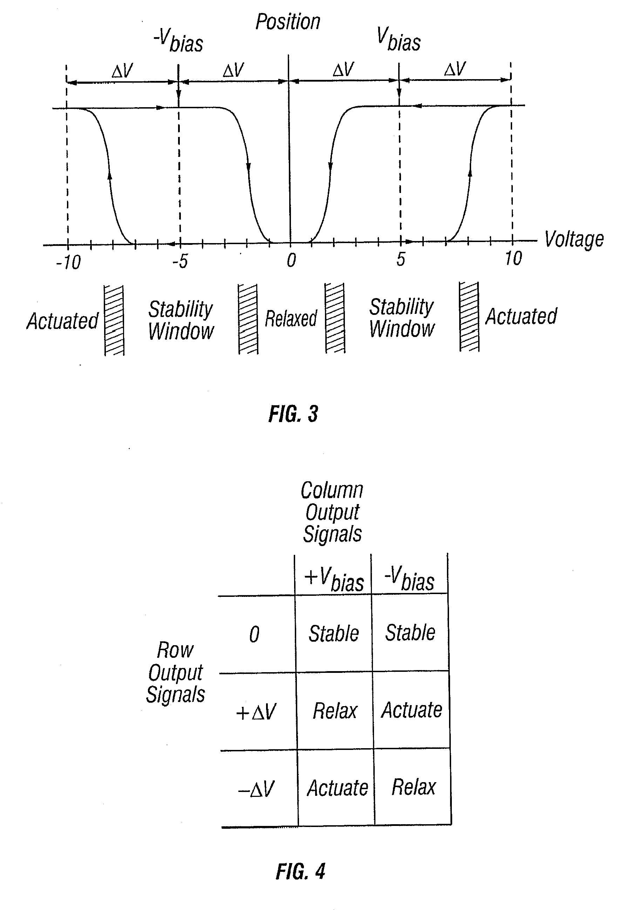

In one embodiment, the processor 21 is also configured to communicate with an array driver 22. In one embodiment, the array driver 22 includes a row driver circuit 24 and a column driver circuit 26 that provide signals to a panel or display array (display) 30. The cross section of the array illustrated in Figure 1 is shown by the lines 1-1 in Figure 2. For MEMS interferometric modulators, the row/column actuation protocol may take advantage of a hysteresis property of these devices illustrated in Figure 3. It may require, for example, a 10 volt potential difference to cause a movable layer to deform from the relaxed state to the actuated state. However, when the voltage is reduced from that value, the movable layer maintains its state as the voltage drops back below 10 volts. In the exemplary embodiment of Figure 3, the movable layer does not relax completely until the voltage drops below 2 volts. There is thus a range of voltage, about 3 to 7 V in the example illustrated in Figure 3, where there exists a window of applied voltage within which the device is stable in either the relaxed or actuated state. This is referred to herein as the "hysteresis window" or "stability window." For a display array having the hysteresis characteristics of Figure 3, the row/column actuation protocol can be designed such that during row strobing, pixels in the strobed row that are to be actuated are exposed to a voltage difference of about 10 volts, and pixels that are to be relaxed are exposed to a voltage difference of close to zero volts. After the strobe, the pixels are exposed to a steady state voltage difference of about 5 volts such that they remain in whatever state the row strobe put them in. After being written, each pixel sees a potential difference within the "stability window" of 3-7 volts in this example. This feature makes the pixel design illustrated in Figure 1 stable under the same applied voltage conditions in either an actuated or relaxed pre-existing state. Since each pixel of the interferometric modulator, whether in the actuated or relaxed state, is essentially a capacitor formed by the fixed and moving reflective layers, this stable state can be held at a voltage within the hysteresis window with almost no power dissipation. Essentially no current flows into the pixel if the applied potential is fixed.

In typical applications, a display frame may be created by asserting the set of column electrodes in accordance with the desired set of actuated pixels in the first row. A row pulse is then applied to the row 1 electrode, actuating the pixels corresponding to the asserted column lines. The asserted set of column electrodes is then changed to correspond to the desired set of actuated pixels in the second row. A pulse is then applied to the row 2 electrode, actuating the appropriate pixels in row 2 in accordance with the asserted column electrodes. The row 1 pixels are unaffected by the row 2 pulse, and remain in the state they were set to during the row 1 pulse. This may be repeated for the entire series of rows in a sequential fashion to produce the frame. Generally, the frames are refreshed and/or updated with new display data by continually repeating this process at some desired number of frames per second. A wide variety of protocols for driving row and column electrodes of pixel arrays to produce display frames are also well known and may be used in conjunction with the present invention.

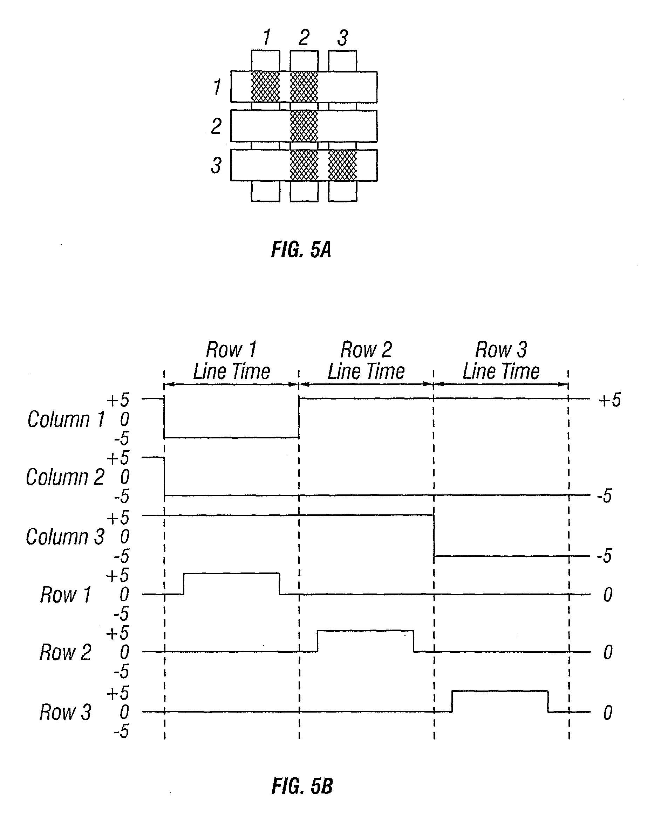

Figures 4 and 5 illustrate one possible actuation protocol for creating a display frame on the 3x3 array of Figure 2. Figure 4 illustrates a possible set of column and row voltage levels that may be used for pixels exhibiting the hysteresis curves of Figure 3. In the Figure 4 embodiment, actuating a pixel involves setting the appropriate column to -V_{bias}, and the appropriate row to +ΔV, which may correspond to -5 volts and +5 volts respectively Relaxing the pixel is accomplished by setting the appropriate column to +V_{bias}, and the appropriate row to the same +ΔV, producing a zero volt potential difference across the pixel. In those rows where the row voltage is held at zero volts, the pixels are stable in whatever state they were originally in, regardless of whether the column is at +V_{bias}, or -V_{bias}. As is also illustrated in Figure 4, it will be appreciated that voltages of opposite polarity than those described above can be used, e.g., actuating a pixel can involve setting the appropriate column to +V_{bias}, and the appropriate row to -ΔV. In this embodiment, releasing the pixel is accomplished by setting the appropriate column to -V_{bias}, and the appropriate row to the same -ΔV, producing a zero volt potential difference across the pixel.

Figure 5B is a timing diagram showing a series of row and column signals applied to the 3x3 array of Figure 2 which will result in the display arrangement illustrated in Figure 5A, where actuated pixels are non-reflective. Prior to writing the frame illustrated in Figure 5A, the pixels can be in any state, and in this example, all the rows are at 0 volts, and all the columns are at +5 volts. With these applied voltages, all pixels are stable in their existing actuated or relaxed states.

In the Figure 5A frame, pixels (1,1), (1,2), (2,2), (3,2) and (3,3) are actuated. To accomplish this, during a "line time" for row 1, columns 1 and 2 are set to -5 volts, and column 3 is set to +5 volts. This does not change the state of any pixels, because all the pixels remain in the 3-7 volt stability window. Row 1 is then strobed with a pulse that goes from 0, up to 5 volts, and back to zero. This actuates the (1,1) and (1,2) pixels and relaxes the (1,3) pixel. No other pixels in the array are affected. To set row 2 as desired, column 2 is set to -5 volts, and columns 1 and 3 are set to +5 volts. The same strobe applied to row 2 will then actuate pixel (2,2) and relax pixels (2,1) and (2,3). Again, no other pixels of the array are affected. Row 3 is similarly set by setting columns 2 and 3 to -5 volts, and column 1 to +5 volts. The row 3 strobe sets the row 3 pixels as shown in Figure 5A. After writing the frame, the row potentials are zero, and the column potentials can remain at either +5 or -5 volts, and the display is then stable in the arrangement of Figure 5A. It will be appreciated that the same procedure can be employed for arrays of dozens or hundreds of rows and columns. It will also be appreciated that the timing, sequence, and levels of voltages used to perform row and column actuation can be varied widely within the general principles outlined above, and the above example is exemplary only, and any actuation voltage method can be used with the systems and methods described herein.

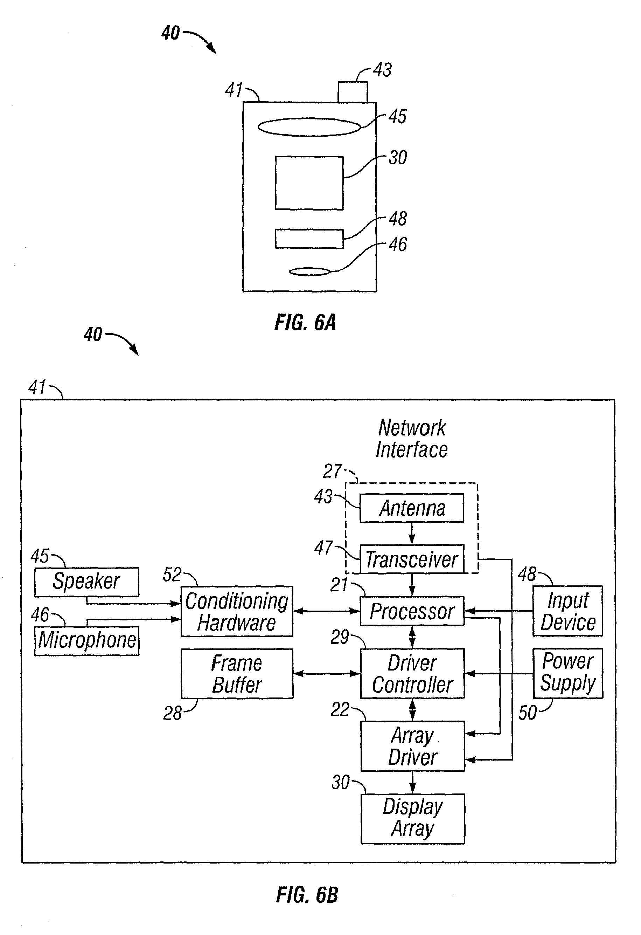

Figures 6A and 6B are system block diagrams illustrating an embodiment of a display device 40. The display device 40 can be, for example, a cellular or mobile telephone. However, the same components of display device 40 or slight variations thereof are also illustrative of various types of display devices such as televisions and portable media players.

The display device 40 includes a housing 41, a display 30, an antenna 43, a speaker 45, an input device 48, and a microphone 46. The housing 41 is generally formed from any of a variety of manufacturing processes as are well known to those of skill in the art, including injection molding, and vacuum forming. In addition, the housing 41 may be made from any of a variety of materials, including but not limited to plastic, metal, glass, rubber, and ceramic, or a combination thereof. In one embodiment the housing 41 includes removable portions (not shown) that may be interchanged with other removable portions of different color, or containing different logos, pictures, or symbols.

The display 30 of exemplary display device 40 may be any of a variety of displays, including a bi-stable display, as described herein. In other embodiments, the display 30 includes a flat-panel display, such as plasma, EL, OLED, STN LCD, or TFT LCD as described above, or a non-flat-panel display, such as a CRT or other tube device, as is well known to those of skill in the art. However, for purposes of describing the present embodiment, the display 30 includes an interferometric modulator display, as described herein.

The components of one embodiment of exemplary display device 40 are schematically illustrated in Figure 6B. The illustrated exemplary display device 40 includes a housing 41 and can include additional components at least partially enclosed therein. For example, in one embodiment, the exemplary display device 40 includes a network interface 27 that includes an antenna 43 which is coupled to a transceiver 47. The transceiver 47 is connected to the processor 21, which is connected to conditioning hardware 52. The conditioning hardware 52 may be configured to condition a signal (e.g. filter a signal). The conditioning hardware 52 is connected to a speaker 45 and a microphone 46. The processor 21 is also connected to an input device 48 and a driver controller 29. The driver controller 29 is coupled to a frame buffer 28 and to the array driver 22, which in turn is coupled to a display array 30. A power supply 50 provides power to all components as required by the particular exemplary display device 40 design.

The network interface 27 includes the antenna 43 and the transceiver 47 so that the exemplary display device 40 can communicate with one ore more devices over a network. In one embodiment the network interface 27 may also have some processing capabilities to relieve requirements of the processor 21. The antenna 43 is any antenna known to those of skill in the art for transmitting and receiving signals. In one embodiment, the antenna transmits and receives RF signals according to the IEEE 802.11 standard, including IEEE 802.11(a), (b), or (g). In another embodiment, the antenna transmits and receives RF signals according to the BLUETOOTH standard. In the case of a cellular telephone, the antenna is designed to receive CDMA, GSM, AMPS or other known signals that are used to communicate within a wireless cell phone network. The transceiver 47 pre-processes the signals received from the antenna 43 so that they may be received by and further manipulated by the processor 21. The transceiver 47 also processes signals received from the processor 21 so that they may be transmitted from the exemplary display device 40 via the antenna 43.

In an alternative embodiment, the transceiver 47 can be replaced by a receiver. In yet another alternative embodiment, network interface 27 can be replaced by an image source, which can store or generate image data to be sent to the processor 21. For example, the image source can be a digital video disc (DVD) or a hard-disc drive that contains image data, or a software module that generates image data.

Processor 21 generally controls the overall operation of the exemplary display device 40. The processor 21 receives data, such as compressed image data from the network interface 27 or an image source, and processes the data into raw image data or into a format that is readily processed into raw image data. The processor 21 then sends the processed data to the driver controller 29 or to frame buffer 28 for storage. Raw data typically refers to the information that identifies the image characteristics at each location within an image. For example, such image characteristics can include color, saturation, and gray-scale level.

In one embodiment, the processor 21 includes a microcontroller, CPU, or logic unit to control operation of the exemplary display device 40. Conditioning hardware 52 generally includes amplifiers and filters for transmitting signals to the speaker 45, and for receiving signals from the microphone 46. Conditioning hardware 52 may be discrete components within the exemplary display device 40, or may be incorporated within the processor 21 or other components.

The driver controller 29 takes the raw image data generated by the processor 21 either directly from the processor 21 or from the frame buffer 28 and reformats the raw image data appropriately for high speed transmission to the array driver 22. Specifically, the driver controller 29 reformats the raw image data into a data flow having a raster-like format, such that it has a time order suitable for scanning across the display array 30. Then the driver controller 29 sends the formatted information to the array driver 22. Although a driver controller 29, such as a LCD controller, is often associated with the system processor 21 as a stand-alone Integrated Circuit (IC), such controllers may be implemented in many ways. They may be embedded in the processor 21 as hardware, embedded in the processor 21 as software, or fully integrated in hardware with the array driver 22.

Typically, the array driver 22 receives the formatted information from the driver controller 29 and reformats the video data into a parallel set of waveforms that are applied many times per second to the hundreds and sometimes thousands of leads coming from the display's x-y matrix of pixels.

In one embodiment, the driver controller 29, array driver 22, and display array 30 are appropriate for any of the types of displays described herein. For example, in one embodiment, driver controller 29 is a conventional display controller or a bi-stable display controller (e.g., an interferometric modulator controller). In another embodiment, array driver 22 is a conventional driver or a bi-stable display driver (e.g., an interferometric modulator display). In one embodiment, a driver controller 29 is integrated with the array driver 22. Such an embodiment is common in highly integrated systems such as cellular phones, watches, and other small area displays. In yet another embodiment, display array 30 is a typical display array or a bi-stable display array (e.g., a display including an array of interferometric modulators).

The input device 48 allows a user to control the operation of the exemplary display device 40. In one embodiment, input device 48 includes a keypad, such as a QWERTY keyboard or a telephone keypad, a button, a switch, a touch-sensitive screen, a pressure- or heat-sensitive membrane. In one embodiment, the microphone 46 is an input device for the exemplary display device 40. When the microphone 46 is used to input data to the device, voice commands may be provided by a user for controlling operations of the exemplary display device 40.

Power supply 50 can include a variety of energy storage devices as are well known in the art. For example, in one embodiment, power supply 50 is a rechargeable battery, such as a nickel-cadmium battery or a lithium ion battery. In another embodiment, power supply 50 is a renewable energy source, a capacitor, or a solar cell, including a plastic solar cell, and solar-cell paint. In another embodiment, power supply 50 is configured to receive power from a wall outlet.

In some implementations control programmability resides, as described above, in a driver controller which can be located in several places in the electronic display system. In some cases control programmability resides in the array driver 22. Those of skill in the art will recognize that the above-described optimization may be implemented in any number of hardware and/or software components and in various configurations.

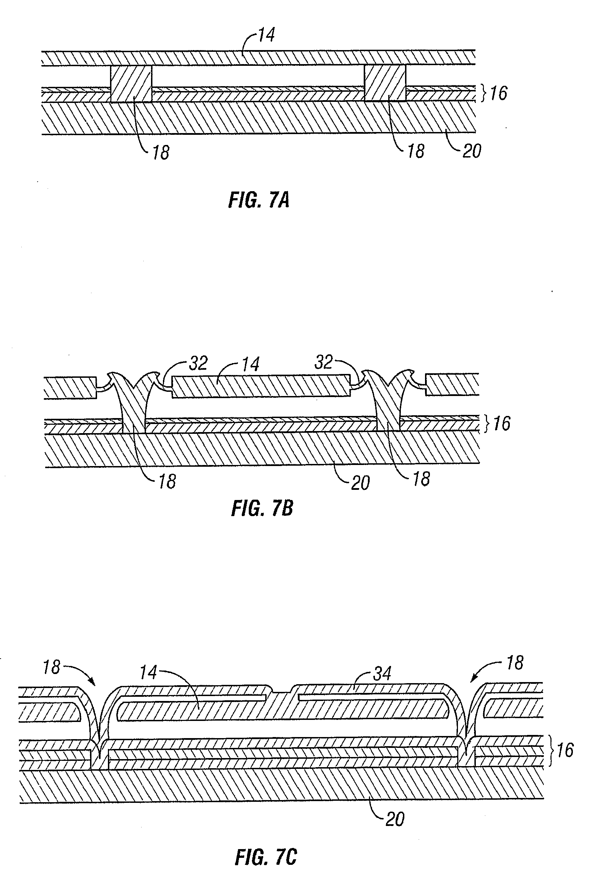

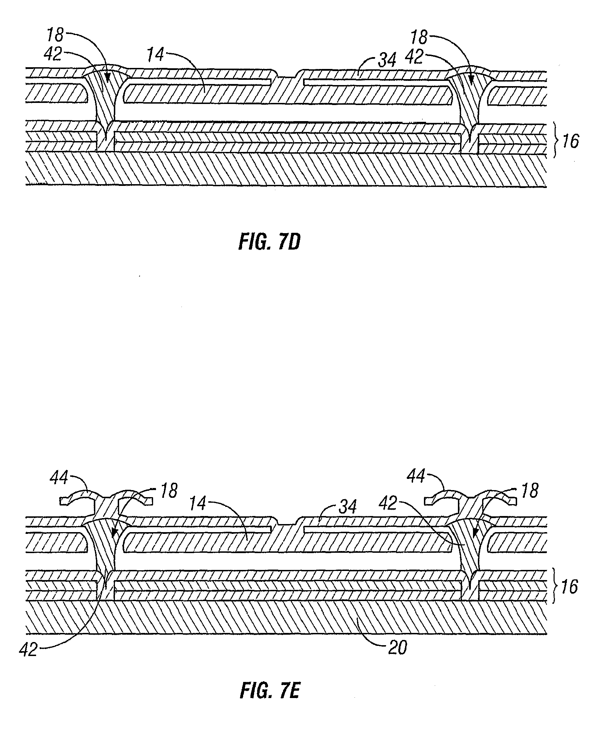

The details of the structure of interferometric modulators that operate in accordance with the principles set forth above may vary widely. For example, Figures 7A-7E illustrate five different embodiments of the movable reflective layer 14 and its supporting structures. Figure 7A is a cross section of the embodiment of Figure 1, where a strip of metal material 14 is deposited on orthogonally extending supports 18. In Figure 7B, the moveable reflective layer 14 is attached to supports at the corners only, on tethers 32. In Figure 7C, the moveable reflective layer 14 is suspended from a deformable layer 34, which may comprise a flexible metal. The deformable layer 34 connects, directly or indirectly, to the substrate 20 around the perimeter of the deformable layer 34. These connections are herein referred to as support posts. The embodiment illustrated in Figure 7D has support post plugs 42 upon which the deformable layer 34 rests. The movable reflective layer 14 remains suspended over the cavity, as in Figures 7A-7C, but the deformable layer 34 does not form the support posts by filling holes between the deformable layer 34 and the optical stack 16. Rather, the support posts are formed of a planarization material, which is used to form support post plugs 42. The embodiment illustrated in Figure 7E is based on the embodiment shown in Figure 7D, but may also be adapted to work with any of the embodiments illustrated in Figures 7A-7C as well as additional embodiments not shown. In the embodiment shown in Figure 7E, an extra layer of metal or other conductive material has been used to form a bus structure 44. This allows signal routing along the back of the interferometric modulators, eliminating a number of electrodes that may otherwise have had to be formed on the substrate 20.

In embodiments such as those shown in Figure 7, the interferometric modulators function as direct-view devices, in which images are viewed from the front side of the transparent substrate 20, the side opposite to that upon which the modulator is arranged. In these embodiments, the reflective layer 14 optically shields some portions of the interferometric modulator on the side of the reflective layer opposite the substrate 20, including the deformable layer 34 and the bus structure 44. This allows the shielded areas to be configured and operated upon without negatively affecting the image quality. This separable modulator architecture allows the structural design and materials used for the electromechanical aspects and the optical aspects of the modulator to be selected and to function independently of each other. Moreover, the embodiments shown in Figures 7C-7E have additional benefits deriving from the decoupling of the optical properties of the reflective layer 14 from its mechanical properties, which are carried out by the deformable layer 34. This allows the structural design and materials used for the reflective layer 14 to be optimized with respect to the optical properties, and the structural design and materials used for the deformable layer 34 to be optimized with respect to desired mechanical properties.

As described above, light incident on an interferometric modulator is either reflected or absorbed via constructive or destructive interference according to an actuation state of one of the reflective surfaces. Such interferometric phenomena are highly dependent on both the wavelength and the angle of incidence of the incident light. This complicates the design of an illumination apparatus that provides artificial lighting to a display device comprising an interferometric modulator or array thereof. In various embodiments, however, the illumination apparatus may advantageously effectively illuminate the display during low lighting conditions. Moreover, in some embodiments an illumination system that is used with an interferometric display device is designed for the unique characteristics of the modulators in the display device.

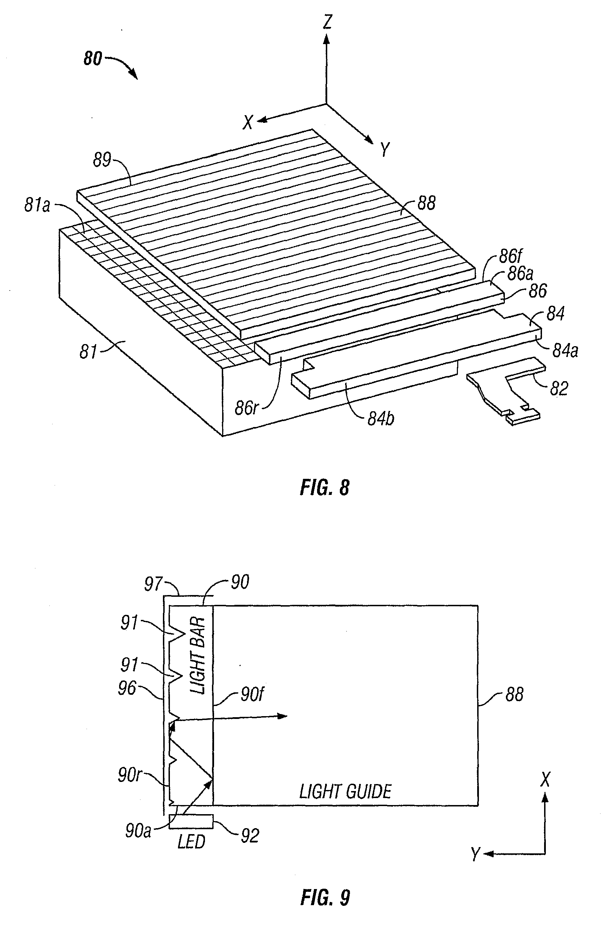

Figure 8 illustrates a perspective view of one embodiment of an illumination system 80 disposed forward a light modulating array 81 comprising a plurality of light modulating elements 81a. In certain embodiments, the light modulating elements 81a are reflective display elements that reflect light incident thereon. The light modulating array 81 may, for example, comprise an array of interferometric modulators. In the embodiments shown in Figure 8, the light modulating array 81 comprises rows and columns of light modulating elements (e.g., extending along x and y directions). At least part of the illumination system 80 is disposed forward of the light modulating array 81 (e.g., in the z direction) to provide front illumination thereof.

In the embodiment of Figure 8, the illumination system comprises a light source 82, a reflector 84, a light bar 86, and a light guide panel 88. In Figure 8, these components are illustrated in an exploded view. In general, lights rays are emitted from the light source 82 into the light bar 86 and are reflected within the light bar 86 due to total internal reflection (TIR). Thus, the light rays propagate through the light bar 86 until the rays are angled below the critical angle by turning features, which are discussed below, and are ejected from the light bar 86. In an advantageous embodiment, the light that is ejected from a front side 86f of the light bar 86 is increased or maximized.

In the embodiment of Figure 8, because some light rays will escape from the light bar from surfaces other than the front side 86f, the illumination system additionally comprises the reflector 84 that is configured to encase at least a portion of the light bar 86 and possibly the light source 82. Thus, in one embodiment the light emitting portion of the light source 82 is at least partially encased in end 84A of the reflector 84 and a portion of the light bar 86 is surrounded by a portion 84B of the reflector 84. In one embodiment, the reflector 84 substantially surrounds all sides of the light bar 86 except for a front side 86f of the light bar 86 from which light may be ejected and an opening for the light source 82, for example. By positioning the reflector 84 around the light bar 86 in such as way, light that escapes from the light bar 86 from the top, bottom, or rear side 86r might be reflected by the reflector 84 back into the light bar 86, and eventually ejected from the front side 86f of the light bar 86.

In one embodiment, the light source 82 is effectively a point source (e.g., an LED) that emits light into an end of the light bar 86, such as end 86A of the light bar 86, while the light bar 86 itself is effectively a linear source. For example, the injected light from the light source 82 is guided along at least a portion of a length of the light bar 86. As described above, the light rays are reflected from a surfaces of the light bar 86, such as top, bottom, rear 86R and front surfaces 86F of the light bar 86 due to total internal reflection (TIR). The light rays are ejected across the length thereof from the front surface 86F of light bar 86 after being reflected from one or more turning structures on the rear surface 86R. Thus, the light bar 86 is configured to spread light in the indicated x direction (e.g., along a length of the light bar 86) and to turn the light in the y direction (e.g., out of the front surface 86F towards the light guide panel 88). The light guide panel 88 then spreads the light in the y direction and turns the light towards the z direction so that the light is emitted towards one or more display elements therebelow. In one embodiment, the light guide panel 88 includes a turning film that directs light propagating through the light guide panel 88 towards the one or more display elements. This prismatic turning film may comprise a film having a plurality of grooves 89 disposed therein that reflect light downwards or rearward out of the rear of the light guide panel 88 and to the light modulating array 81. The grooves 89 in the light guide panel 88 may operate based on total internal reflection in some embodiments. In other embodiments, other type of features may be included in the light guide panel 88 to reflect, scatter, or redirect light guided within the light guide panel to the light modulating elements 81a.

For display devices comprising interferometric modulators, for example, the emission characteristics into the light guide panel 88 are important for the optimal performance of the interferometric modulators. For example, the light is uniformly distributed in both the x and y directions across the light guide panel 88 and the plurality of display elements.

Turning features in the light bar 86 can be used to distribute light into the light guide panel 88. As discussed more fully below, control over the position and orientation of the turning features in the light bar 86 enables control over the distribution of light within the light guide panel 88 and the consequent illumination of the array of display elements (e.g., in the x direction).

Figure 9 is a top view of an illumination apparatus comprising a light bar 90 and the light guide panel 88 showing in more detail the turning features that turn light propagating within the light bar into the light guide panel 88. In the embodiment of Figure 9, the light bar 90 has a first end 90A for receiving light from a light source 92. As noted above, the light source 92 may comprise a light emitting diode (LED) or any other suitable light source. In this embodiment, the light bar 90 comprises material that supports propagation of light along the length of the light bar 90.

In the embodiment of Figure 9, the light bar 90 also comprises turning microstructure on or adjacent to a rear surface 90R, which is substantially opposite the front surface 90F. In one embodiment, the turning microstructure is configured to turn at least a substantial portion of the light incident on the rear surface 90R of the light bar 90 and to direct that portion of light out of the light bar 90 into the light guide panel 88. The turning microstructure of the light bar 90 comprises a plurality of faceted features 91. In one embodiment, the turning microstructure is integrated with the light bar 90. For example, the light bar with turning microstructure can be formed by injection molding. In other embodiments, a turning film may be disposed on the rear side of the light bar 90. Turning films may be formed by, e.g., embossing, and the film may be laminated on the rear side of the light bar 90.

In one embodiment, reflectors 96, 97 may be disposed with respect to the light bar 90 to reflect light escaping therefrom back into the light bar. Such reflectors 96, 97 may have contoured shape, for example, matching the grooves 91 of the light bar 90. The reflectors 96, 97 may also comprise retro-reflectors in some embodiments.

Additionally, in one embodiment an optical coupling element (not shown) may be disposed between the light bar 90 and the light guide panel 88. This optical coupling element may comprises for example a collimator that at least partially collimates light ejected from the light bar 90 and directed into the light guide panel 88. This optical coupling element may be tapered; for example, the optical coupling element may have a first side closer to the light bar that is larger and a second side closer to the light guide panel that is smaller. Such tapered geometry may provide increase collimation. In other embodiments, the optical coupling element is excluded and the light bar 90 is tapered. The rear side 90r of the light bar 90 farthest from the light guide panel 88 may be larger and the front side 90f closest to the light guide panel may be smaller. Light exiting the light bar 90 and entering the light guide panel 88 may thereby be collimated. In other embodiments, no optical coupling element is disposed between the light bar 90 and the light guide panel 88.

An example ray of light is also illustrated in Figure 9. The light ray emitted from the light source 92 propagates into the light bar 90, where it undergoes total internal reflection (TIR) at a front surface 90F that is adjacent air or some other medium. The light ray then reflects off the rear surface 90R. In particular, the light ray reflects off a reflective surface portion parallel to the length of the light bar 90 and then off of a sloped surface portion forming a turning feature. The light ray is turned by one or more turning microstructures and directed out of the light bar 90. The light ray shown is directed near normal to the length of the light bar.

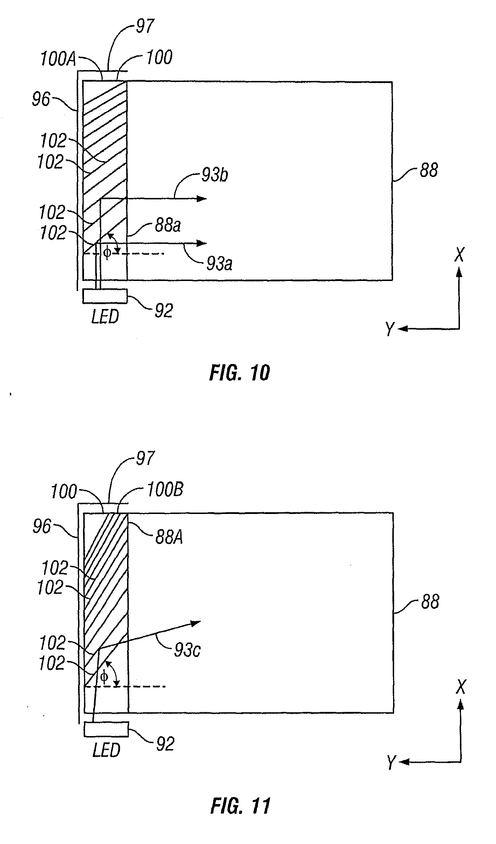

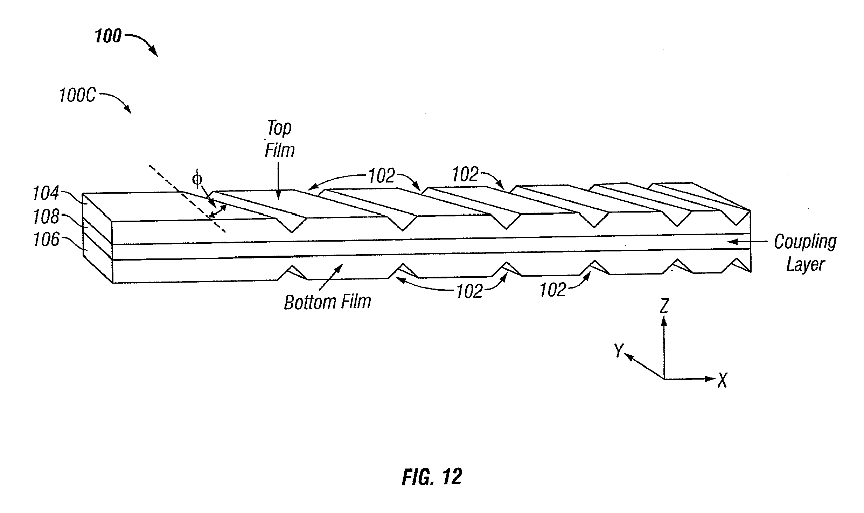

Figures 10, 11, and 12 show how the orientation, position, and configuration of the turning features can be adjusted to control the propagation of light from the light bar to the light guide panel 88. Figures 10 and 11 are top views of embodiments of light bars 100, including light bars 100A and 100B, wherein each of the light bars 100 comprises microstructures on a top and/or bottom surface of the light bars 100. Figure 12 is an elevated side view of the light bar 100A of Figure 10. In the embodiments of Figures 10, 11, and 12, the light bars 100 comprise one or more turning features that are adapted to selectively turn light from the light bars 100 onto the light guide panel 88. In one embodiment, the turning features comprise elongated structures that are angled with respect to the length and width of the light bar to control the injection of light into the light guide panel.

For example, in the embodiment of Figures 10, 11, and 12, the turning features comprise one or more turning features 102 that are configured to redirect light rays towards the light guide panel 88. In the embodiment of Figures 10, 11, and 12, the faceted features 102 comprise V-shaped grooves in a top layer 104 (Figure 12) and/or bottom layer 106 (Figure 12) of the light bar 100. The V-shaped grooves comprise sloping sidewalls or facets. The sloping sidewalls or facets have normals that are angled with respect to the length, width, and/or height of the light bar 100. In other embodiments, the turning features may comprise any other structures that are suitable for turning light out of a light bar. For example, the grooves need not be in the shape of a V but can instead have one sloping sidewall and one straight sidewall. The sloping surface portions may be curved instead of straight. The elongate features need not extend continuously from the rear side to the front side of the light bar but may be interrupted. Additionally, the elongate features may vary in size, shape, or other property from the rear side to the front side of the light bar. Other variations are possible.

In one embodiment, the top and/or bottom layers 104, 106 may comprise one or more thin films that are imprinted with the turning features, such as the faceted features 102. In the illustrations of Figures 10 and 11, top surfaces of the light bars 100A, 100B are illustrated having faceted features 102 on the top surfaces. Each of the light bars 100A, 100B may further include a bottom surface that also comprises faceted features 102. The turning films comprising thin films may be adhered together or one or more of the turning films may be adhered to a thin film carrier resulting in a stack of thin films having a reduced thickness in comparison with conventional light bars. Accordingly, the light bars 100 of Figures 10, 11, and 12 may advantageously have thicknesses that are less than other light bars, such as the light bar 90 of Figure 9. Additionally, one or both of the thin turning films may be adhered to a carrier that has an optical function such as filters. For example, such an optical element 108 may be positioned in a central portion of the light bars 100 shown in Figures 10, 11, and 12.

As described above, after light is injected into the light bars 100 from light source 92, the light propagates inside the light bar by total internal reflection (TIR) and is redirected towards the light guide panel 88 when rays strike the faceted features 102, which are embossed on the top or the bottom surfaces 104, 106 in the embodiment shown in Figure 12. An angle φ, which represents the orientation of the elongate turning features, can be set according to how much turn is desired for incident light rays. (In Figures 10 and 11, the angle φ is the angle between a longitudinal direction of the elongate features 102 and the normal to the light bar, although other angles can be used to characterize the orientation of the elongate features on the top and bottom of the light bars 100.)

In various preferred embodiments, the angle φ can be chosen to allow tuning of the orientation of the light distribution with respect to the light guide panel 88. In one embodiment, the angle φ is set to 45° such that a 90° rotation of the light incident on the faceted features 102 occurs, thus directing the light rays toward the light guide panel 88, such as along exemplary paths 93a, 93b, and 93c of Figures 10 and 11. In the exemplary embodiment of Figure 10, the angle φ is set to about 45°, while in the embodiment of Figure 11 the angle φ is set to about 60°. Thus, exemplary paths 93a and 93b indicate a rotation of about 90° due to reflection from the faceted features 102 of light bar 100A (Figure 10) that are positioned such that φ is about 45°. As illustrated in these Figures, as the angle of φ increases, the angle at which the light rays are ejected from the light bar 100 (with respect to the normal of the input face 88A or the centerline or width of the light guide panel 88) also increases. Thus, φ may be adjusted depending on the angular distribution of light from the light source 92 in order to optimize the angle of light ejected from the light bars 100. Additionally, φ may be adjusted to achieve a desired light injection angle into the light guide panel 88. This control can be used to produce the desired illumination on the array of display elements. For example, the turning features may be configured to produce increased uniformity within the light guide panel and on the array of display elements. Additionally, the turning features may be adjusted to provide optimal viewing of the light modulating array 81 at a desired viewing angle.

In one embodiment, the faceted features 102 may be spaced substantially evenly along a length of a light bar. In other embodiments, such as those of Figures 10, 11, and 12, spacing between adjacent faceted features 102 decreases as the distance from the light source 92 increases. In this embodiment, the faceted features 102 are spaced more closely together in order to increase a proportion of the remaining light that is ejected from the light bar 100 in order to uniformly distribute light injected across the entire input face 88A of the light guide panel 88. In other embodiments, the depth of the facets may be increased to increase a proportion of light rays that are ejected from the facets. For example, in one embodiment a depth of the faceted features 102 may increase as the distance from the light source 92 increases. In other embodiments, the spacing and orientation of the faceted features 102 can vary along the length of the light bar in any other manner in order to obtain substantially equal, or other desired, light ejection across the entire length of the input face 88A of the light guide panel 88.

In the embodiment of Figure 12, the light bar 100C comprises a coupling layer 108 between the top and bottom layers 104, 106. In one embodiment, the coupling layer 108 comprises an optical grade adhesive that bonds the layers 104, 106 together. In one embodiment, the layers 104, 106 are casted directly onto the coupling layer 108. Depending on the embodiment, the coupling layer 108 may comprise one or more optical components, such as filters, for example. Adhesives may be used to adhere films, film stacks, and/or components together. Thus, the light bar 100C may advantageously comprise a desired optical component, rather than positioning the desired optical component outside of the light bar 100C. More or less layers may be used. As noted above, although the light bar 100C is illustrated with both a top and bottom layers 104, 106 having faceted features 102, in other embodiments a light bar may comprise only a single layer, such as either layer 104 or 106, having facets on one or both of a top and bottom surface.

In one embodiment, the faceted features 102 can be fabricated by imprinting the surface relief geometry on a thin film substrate. For example, a roll-to-roll embossing (e.g., hot or UV) or casting process may be used to imprint the faceted features 102 on a film. In one embodiment, a method of forming a faceted light bar, such as light bar 100, comprises embossing faceted features 102 on a film layer, cutting layers 104, 106 from the embossed film layer, and laminating layers 104, 106 together, optionally with a coupling layer therebetween. Depending on the embodiment, large sheets of a thin film may be embossed with faceted features and laminated together prior to cutting the laminated film layers to the appropriate sizes for use as light bars. In one embodiment, for example, the laminated thin films may be cut to lengths of from about 30-80mm and widths from about 1-5 mm. In an exemplary embodiment, the laminated thin films are cut to create light bars having dimensions of about 40mm x 3mm, with a thickness defined by the thickness of the embossed thin films. In embodiments where the layers 104, 106 are embossed with facets, the layers may be very thin, such as from 5 - 60 um, for example. In other embodiments, the film layers may have other thicknesses, such as from 25-350 um, for example. Accordingly, a light bar comprising two light bars of 10 um and a coupling layer of 10-30 um, for example, has a total thickness of less than 50 um. In contrast, a light bar having similar faceted features that is fabricated by injection molding typically has a thickness of 200 um or more. Accordingly, the footprint of faceted light bars formed by embossing may be smaller than the footprint of faceted light bars formed by other methods, such as injection molding.

In one embodiment, a faceted light bar comprises only a single film layer. Such a light bar may be fabricated, for example, by embossing both a top and a bottom layer of a film with facets. For example, the top side of the film may initially be embossed, the film may then be flipped, and the bottom side can then be embossed. Alternatively, both sides may be embossed concurrently. Depending on the embodiment, the film that is embossed by any of the methods described herein may be pre-sized for a single light bar, e.g., cut to the size of layers 104, 106, or a larger film layer may be embossed and then cut to the size needed for individual light bars, e.g., the size of layers 104, 106. Alternatively, two large film layers may be embossed and coupled together, such as via an optical coupling layer, and then cut into the appropriate sizes for use in individual light bars.

In one embodiment, the film has a thickness in the range of between about 10µm to 300µm. In other embodiments, the film has a thickness in the range of between about 50µm to 60µm. In other embodiments, other thicknesses of film may also be used. As noted above, in one embodiment, large sheets of film are imprinted with the surface relief geometry defining the faceted features 102, such as by an embossing process, for example, and the film is subsequently cut to the desired sizes. After cutting the film, two pieces of the film may be used as top and bottom layers, such as layers 104, 106 of Figure 3, of a light bar. In one embodiment, the coupling layer 108 comprises an optical quality adhesive material that is index-matched to the top and/or bottom layers 104, 106 in order to reduce Fresnel reflections between the coupling layer and the top and bottom layers 104, 106, for example. In some embodiments it is acceptable for the index of refraction of the coupling layer 108 to be less than or equal to that of the top and bottom layers 104, 106, but preferably not larger than any one of the refractive indices of the layers 104, 106. Such an embodiment may reduce any loss of ejection efficiency. In other embodiments, however, such as when the coupling layer 108 is substantially lossless, the refractive index of the coupling layer 108 may be larger than the refractive indices of the layers 104, 106. In other embodiments, the coupling layer may comprise other materials, such as filters, in addition to, or as a replacement of, one or more adhesive materials. For example, the coupling layer 108 may comprise an optical component that is coated with optical adhesive in order to adhere to one or more film layers 104, 106 having faceted features 102. In various embodiments, depending partially on the optical component or components that are included in the coupling layer 108, the thickness of the coupling layer 108 may range from 10µm to 100's of µm or more, for example.

In one embodiment, the faceted features 102 of the top and bottom film layers 104, 106 are spatially offset so that the corresponding facets do not directly overlap. For example, in the embodiment of Figure 12 the faceted features 102 on the top and bottom film layers 104, 106 are horizontally aligned. However, in one embodiment the faceted features 102 on one of the surfaces may be offset so that the faceted features 102 on the top film are not horizontally aligned with corresponding faceted features 102 on the bottom layer 106. In one embodiment, offsetting the facets on the top and bottom film layers 104, 106 may advantageously control the efficiency of ejecting light rays from the light bar 100.

Due to the possible large scale fabrication of film with facets, such as according to the above-described processes, light bars comprising such faceted films may be manufactured at a high volume and possibly at reduced costs when compared with conventional injection molded light bars.

As described above, in one embodiment reflectors 96, 97 may be disposed with respect to the light bar 100 to reflect light escaping therefrom back into the light bar. Such reflectors 96, 97 may have contoured shape, for example, matching the grooves 102 of the light bar 100. The reflectors 96, 97 may also comprise retro-reflectors in some embodiments.

Additionally, in one embodiment an optical coupling element (not shown) may be disposed between the light bar 100 and the light guide panel 88. This optical coupling element may comprises for example a collimator that at least partially collimates light ejected from the light bar 100 and directed into the light guide panel 88. This optical coupling element may be tapered; for example, the optical coupling element may have a first side closer to the light bar that is larger and a second side closer to the light guide panel that is smaller. Such tapered geometry may provide increase collimation. In other embodiments, the optical coupling element is excluded and the light bar 100 is tapered. The side of the light bar 100 farthest from the light guide panel 88 may be larger and the side closest to the light guide panel may be smaller. Light exiting the light bar 100 and entering the light guide panel 88 may thereby be collimated. In other embodiments, no optical coupling element is disposed between the light bar 100 and the light guide panel 88.

A wide variety of other variations are also possible. Films, layers, components, and/or elements may be added, removed, or rearranged. Additionally, processing steps may be added, removed, or reordered. Also, although the terms film and layer have been used herein, such terms as used herein include film stacks and multilayers. Such film stacks and multilayers may be adhered to other structures using adhesive or may be formed on other structures using deposition or in other manners.

Furthermore, as those of skill in the art will appreciate, as front lights and backlights that are used in electronic devices become thinner, it becomes harder to efficiently inject light into the thinner light guide panels with injection molded light bars. More particularly, because currently available light bars are typically injection molded, physical and process limitations of injection molding can limit the minimum thickness of such light bars. Accordingly, because the light bars described herein, such as light bars 100, may be fabricated using one or more thin films, a thickness of the light bars may be reduced when compared to injection molded light bars. Thus, the thin film light bars advantageously allow efficient ejection of light in a reduced thickness package.

The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

## Claims

1. A light bar having a front surface configured for optical communication with a display device, the light bar being configured to guide light along a length thereof, the light bar comprising:
a first film means comprising a plurality of faceted features;
a second film means comprising a plurality of faceted features; and
an optical coupling means positioned between and coupling the first and second film means, wherein the faceted features on the first and second film means are configured to direct light out of the front surface of the light bar towards the display device.

2. The light bar of Claim 1, wherein the optical coupling means is configured to propagate light.

3. The light bar of Claim 1, wherein the optical coupling means comprises an adhesive.

4. The light bar of Claim 1, wherein the first film means comprise a first film layer;
the second film means comprises a second film layer; or
the optical coupling means comprises an optical coupling layer.

5. The light bar of Claim 1, wherein the first and second film means each have a thickness of less than about 350 micrometers.

6. The light bar of Claim 1, wherein at least some of the faceted features are formed by embossing.

7. A method of manufacturing a light bar having a front surface in optical communication with a display device, the light bar being configured to guide light along a length thereof, the light bar comprising:
forming a plurality of faceted features on a first film layer;
forming a plurality of faceted features on a second film layer; and
positioning an optical coupling layer between the first and second film layers, wherein the faceted features on the first and second film layers are configured to direct light out of the front surface of the light bar towards the display device.

8. The method of Claim 7, wherein the optical coupling layer is configured to propagate light between the first and second film layers.

9. The method of Claim 7, wherein the optical coupling layer comprises an adhesive.

10. The method of Claim 7, wherein the forming a plurality of faceted features on the first film layer comprises embossing the first film layer.

11. The method of Claim 7, wherein the forming a plurality of faceted features on the second film layer comprises embossing the second film layer.
